**Europäisches Patentamt**

**European Patent Office**

**Office européen des brevets**

(19)

(11) Veröffentlichungsnummer: **0 009 586**
**B1**

(12) # EUROPÄISCHE PATENTSCHRIFT

(45) Veröffentlichungstag der Patentschrift:
02.02.83

(21) Anmeldenummer: 79103018.2

(22) Anmeldetag: 17.08.79

(51) Int. Cl.³: **H 04 Q 11/04,** H 04 J 3/06,
**H 04 L 7/04**

(54) Verfahren zur Synchronisierung von Sende- und Empfangseinrichtungen.

(30) Priorität: 28.09.78 DE 2842371

(43) Veröffentlichungstag der Anmeldung:
16.04.80 Patentblatt 80/8

(45) Bekanntmachung des Hinweises auf die Patenterteilung:
02.02.83 Patentblatt 83/5

(84) Benannte Vertragsstaaten:
AT CH DE FR GB IT NL SE

(56) Entgegenhaltungen:
DE-A-2 516 192
US-A-3 539 997
US-A-4 002 834

1978 INTERNATIONAL ZURICH SEMINAR ON DIGITAL COMMUNICATIONS, 7.–9. März 1978, Seiten D1.1–D1.4 Zürich, CH. P. HIRSCHMANN et al.: «Design concept and features of digital subscriber sets.»

1972 INTERNATIONAL ZURICH SEMINAR ON INTEGRATED SYSTEMS FOR SPEECH, VIDEO AND DATA COMMUNICATIONS, 15.–17. März 1972, Seiten C3(1)–C3(7) Zürich, CH. J. E. FLOOD et al.: «Application of delta modulation in the telephone subscriber's network.»

(73) Patentinhaber: SIEMENS AKTIENGESELLSCHAFT,
Berlin und München Wittelsbacherplatz 2,
D-8000 München 2 (DE)

(72) Erfinder: Zemanek, Josef, Dipl.-Ing.,
Aidenbachstrasse 144a, D-8000 München 71 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Synchronisierung von Sende- und Empfangseinrichtungen

Die Erfindung betrifft ein Verfahren zur Synchronisierung von Sende- und Empfangseinrichtungen, insbesondere digitalen Teilnehmerstellen eine PCM-Fernmeldenetzes, durch Auswertung von Synchronisierworten, die am Anfang der von einer übergeordneten Sendeeinrichtung, insbesondere einer digitalen Vermittlungsstelle des PCM-Fernmeldenetzes unter Einhaltung festgelegter Sendepausen ausgesendeten Nachrichtensignalblöcke auftreten, mit Hilfe einer Synchronisiereinrichtung, die während einer Synchronisierphase aufgrund des Empfanges eines Synchronisierwortes eine Neusynchronisierung veranlasst und in der jeweils anschliessenden Synchronbetriebsphase das zeitgerechte Auftreten des als richtig erkannten Synchronisierwortes überwacht.

Im Falle der angedeuteten Nachrichtensignalübertragung zwischen der digitalen Vermittlungsstelle und einer digitalen Teilnehmerstelle eines PCM-Fernmeldenetzes unter Verwendung einer zweiadrigen Teilnehmeranschlussleitung erfolgt während der erwähnten Sendepause bei der Nachrichtensignalblockaussendung durch die Vermittlungsstelle eine Nachrichtensignalblockaussendung von der Teilnehmerstelle aus, so dass also die Teilnehmeranschlussleitung abwechselnd für eine Signalübertragung in beiden Übertragungsrichtungen ausgenutzt ist. Das am Anfang der Nachrichtensignalblöcke, die bei einer digitalen Teilnehmerstelle ankommen, auftretende Synchronisierwort beginnt vereinbarungsgemäss mit einem Bit vom Binärwert "1" und weist zwei Bit auf, die periodisch einmal die Binärwertkombination 10 und dreimal die Binärwertkombination 11 aufweisen. Hierdurch wird ein vier Sende-/Empfangsperioden umfassender Überrahmen gekennzeichnet, wodurch es möglich ist, die ausser dem in solchen Nachrichtenblöcken noch enthaltenen zwei Signalisierbits zu einem 8 Bit umfassenden Signalisierwort zusammenfassen.

Die erwähnten Bitkombinationen für das Synchronisierwort können allerdings auch im übrigen Teil des Nachrichtensignalblockes vorkommen, so dass es in den Synchronisierphasen, in denen durch die Synchronisiereinrichtung zum Zwecke einer Neusynchronisierung nach dem Auftreten eines Synchronisierwortes gesucht wird, zu einem fehlerhaften Aufsynchronisieren auf den Zeitpunkt des Auftretens solcher innerhalb eines Nachrichtensignalblockes liegender Bitkombinationen kommen kann, was zwar bei nachfolgenden Überprüfungen erkannt und korrigiert wird, jedoch unter Umständen zu einer erheblichen Verzögerung der richtigen Aufsynchronisierung führt.

Bei dem eingangs erwähnten Synchronisierverfahren, von dem die Erfindung ausgeht, sind solche Fehlsynchronisierungen dadurch vermieden, dass aufgrund einer Codedarstellung der Nachrichtensignale, bei der beide Signalzustände eindeutig vom Ruhezustand unterscheidbar sind, empfangsseitig ein Signal hergeleitet wird, das eindeutig die Phasenlage und Länge eines Nachrichtensignalblocks angibt, so dass auch gewährleistet werden kann, dass tatsächlich nur die am Anfang eines Nachrichtensignalblocks auftretenden beiden Bits bei der Suche nach einem Synchronisierwort ausgewertet werden.

Bei Verwendung des sogenannten AMI-Codes (alternate mark inversion, bei dem die Binärwerte "1" abwechselnd durch Impulse mit positiver und negativer Spannung und die Binärwerte "0" durch die Spannung Null angegeben werden, wie dies häufig bei der oben erwähnten Nachrichtensignalübertragung zwischen digitalen Teilnehmerstellen und der digitalen Vermittlungsstelle eines PCM-Zeitmultiplexfernmeldenetzes der Fall ist, besteht die Möglichkeit der Erzeugung eines solchen Empfangssteuersignals allerdings nicht.

Bei einem bekannten Synchronisierverfahren (US-A-3 539 997), bei dem ein kontinuierlicher Datenstrom auf das Auftreten eines Rahmenbeginnbits zu überwachen ist, wird im Zuge einer Neusynchronisation die Auswertung von Bits der Nachrichtensignalwörter als Rahmenbeginnbit dadurch ausgeschlosse, dass zunächst alle Bitstellen ermittelt werden, auf denen Bits des vom Binärwert eines Rahmenbeginnbits abweichenden Binärwertes auftreten können. Wenn bei einem beispielsweise 24 Nachrichtensignalbits und ein Rahmenbeginnbit umfassenden Pulsrahmen 23 solcher Bitstellen ermittelt sind, steht fest, dass die 24. Bitstelle dem Pulsrahmenanfang entspricht. Da das Auftreten von Bits des Binärwertes "0" auf den genannten 23 Bitstellen statistischen Gesetzen unterworfen ist, kann es bei diesem Vorgehen unter Umständen sehr lange dauern, bis das Rahmenbeginnbit gefunden ist.

Aufgabe der vorliegenden Erfindungs ist es daher, ein Verfahren zur Synchronisierung anzugeben, das sowohl sicher gegen Fehlsynchronisierungen als auch relativ schnell ist.

Erfindungsgemäss wird diese Aufgabe bei einem Verfahren der eingangs beschriebenen Art dadurch gelöst, dass in der Synchronisierphase die Synchronisiereinrichtung für ihren Betrieb im Zusammenhang mit einer Neusynchronisation erst dann freigegeben wird, wenn ein vom Sende-/Empfangstakt weitergeschalteter Zähler, der durch jedes empfangene Bit desjenigen Binärwerts, den das erste Bit eines Synchronisierwortes aufzuweisen hat, in seinen Zähleranfangsstand gestellt wird, einen Zählerstand erreicht hat, der mindestens der Summe der Bitzeitspannen entspricht, über die hinweg in einem Nachrichtensignalblock aufgrund der Gesetzmässigkeit des der Nachrichtenblockübertragung zugrundeliegenden Codes nacheinander Bits des anderen Binärwerts auftreten können, und bei dessen Erreichen ein Weiterzählen verhindert wird.

Beim sogenannten HDB3-Code ist gewährleistet, dass nicht mehr als 3 Bits von Binärwert "0" in einem Nachrichtensignal auftreten. Wenn also der markante Zählerstand des erfindungsgemäss vorgesehenen Zählers einer grösseren Zeitspanne als

3 Bitzeitspannen entspricht, wird der Zähler, der durch ein "1"-Bit eines Nachrichtensignalblocks in seinen Anfangszustand gestellt worden war, während der Zeitdauer dieses Nachrichtensignalblokkes seinen Zählerendstand nicht erreichen können, da er zwischenzeitlich immer wieder zurückgestellt wird. Der Zählerstand wird also erst in der Pause zwischen dem Empfang zweier Nachrichtensignalblöcken erreicht sein, so dass das Fehlen von Störungen innerhalb einer solchen Pause vorausgesetzt, eine Neusynchronisierung tatsächlich erst aufgrud des Auftretens des Synchronisierworts am Anfang des nachfolgenden Nachrichtensignalblocks erfolgen kann.

Gemäss weiterer Ausgestaltung der Erfindung erfolgt die Freigabe der Synchronisiereinrichtung bei einem Zählerstand des Zählers, der einer nahezu solange wie die Empfangspause zwischen den Empfang zweier Nachrichtensignalblöcke dauernden Zeitspanne entspricht. Hiermit ist sichergestellt, dass auch gegebenenfalls während der Pause zwischen dem Empfang zweier Nachrichtensignalblöcke auftretende Störungen nicht zu einem falschen Aufsynchronisieren führen können.

Nachstehend wird die Erfindung anhand von zwei Figuren näher erläutert.

Von den Figuren zeigen:

Figur 1 eine Schaltungsanordnung zur Durchführung des erfindungsgemässen Verfahrens im zum Verständnis erforderlichen Umfang.

Figur 2 ein Zeitdiagramm, anhand dessen ein Aufsynchronisierungsvorgang erläutert wird.

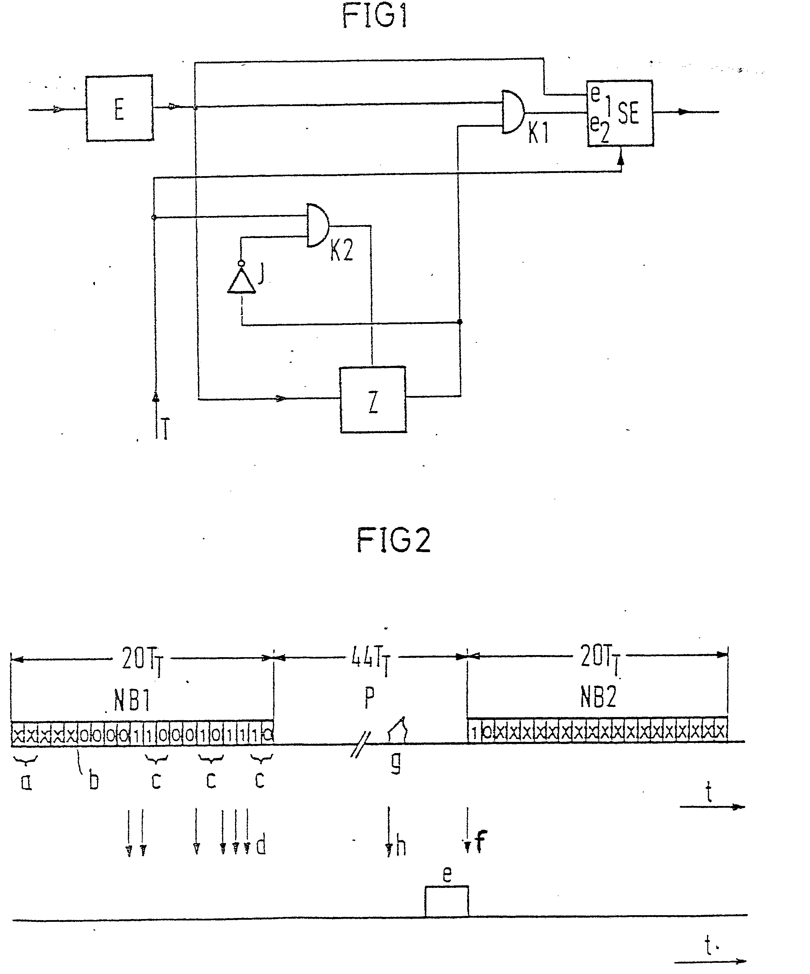

Die Anordnung gemäss Figur 1 zeigt einen Empfänger E für den Empfang von Nachrichtensignalblöcken, an deren Anfang ein Synchronisierwort auftritt.

Die Anordnung enthält ferner eine Synchronisiereinrichtung SE, die während einer Synchronisierphase über ihren Eingang e2 die ankommenden Bits auf das Auftreten eines Synchronisierwortes überwacht und sobald dies eintritt, für eine Neueinstellung der Einrichtungen sorgt, die die Zeitverhältnisse innerhalb einer Sende- und Empfangseinrichtung bestimmen, zu der die dargestellte Anordnung gehört. Während der anschliessenden Synchronbetriebsphase überwacht die Synchronisiereinrichtung SE über ihren Eingang e1 den ankommenden Nachrichtensignalfluss auf das zeitgerechte Auftreten von Synchronisierwörtern.

Die Anordnung gemäss Figur 1 enthält ferner einen Zähler Z, der durch den in der erwähnten Sende-/Empfangseinrichtung massgeblichen Takt T fortgeschaltet wird. Sobald im empfangenen Nachrichtensignalfluss ein Bit vom Binärwert "1" auftritt, wird dieser Zähler in den Zähleranfangszustand zurückgestellt. Bei Erreichen eines bestimmten Zählerendstandes gibt er an ein Koinzidenzglied K1, das dem Eingang e2 der Synchronisiereinrichtung SE vorgeschaltet ist, ein Freigabesignal ab, so dass der ankommende Signalfluss über den anderen Eingang des Koinzidenzgliedes K1 an die Synchronisiereinrichtung gelangen kann.

Der erwähnte Zählerstand ist, wie angedeutet, erreicht, wenn entweder seit Auftreten eines "1"-Bits mindestens so viele Bitzeitspannen vergangen sind wie der Gesetzmässigkeit des verwendeten Codes entsprechend "0"-Bits nacheinander auftreten können und nahezu die Länge der Pause zwischen dem Empfang zweier Nachrichtensignalblöcke verstrichen ist. Bei den in Figur 2 dargestellten Zeitverhältnissen ist der letztgenannte Zählerstand zugrunde gelegt. Das bei Erreichen des Zählerendstandes abgegebene Signal wird über einen Inverter I ausserdem an den zweiten Eingang des Koinzidenzgliedes K2 gelegt, so dass ab Erreichen dieses Zählerendstandes der Takt T den Zähler nicht mehr weiterschalten kann.

In der oberen Zeile der Figur 2 sind zwei Nachrichtensignalblöcke NB1 und NB2 dargestellt, die beispielsweise 20 Bit umfassen, von denen im Falle eines ungestörten Betriebs die beiden ersten das Synchronisierwort, die dritten und vierten ein Signalisierwort und die fünften bis zwanzigsten zwei Nachrichtensignalwörter von jeweils 8 Bit bilden. Zwischen den beiden Zeitspannen, während der die Nachrichtensignalblöcke NB1 und NB2 auftreten, liegt eine Empfangspause P, die im Falle des Synchronismus dazu ausgenutzt wird, von der betrachteten Sende-/Empfangseinrichtung bzw. digitalen Teilnehmerstelle aus einen Nachrichtensignalblock zu einer übergeordneten Sende-/Empfangseinrichtung usw. digitalen Vermittlungsstelle auszusenden. Die betrachtete Sende-/Empfangseinrichtung ist so eingerichtet, dass während einer Synchronisierphase, solange also noch kein Synchronismus besteht, der Sendebetrieb eingestellt wird.

Im dargestellten Fall ist angenommen, dass beim ersten Nachrichtensignalblock NB1 die beiden ersten Bits a ein verfälschtes Synchronwort darstellen. Dies wird beispielsweise zum Zeitpunkt b festgestellt, womit der Synchronisierbetrieb eingeleitet wird. Normalerweise, also ohne die erfindungsgemässen Merkmale, könnte nun jede der 10-Bitkombinationen während der Zeitspanne c zu einer Neusynchronisierung führen, was natürlich eine Fehlsynchronisierung darstellen würde.

Mit jedem der "1"-Bits im ersten Nachrichtensignalblock NB1, deren Auftreten durch mit d bezeichnete Pfeile markiert ist, wird der Zähler Z der Schaltungsanordnung gemäss Figur 1 auf Null zurückgesetzt. Er wird wegen des vorausgesetzten Zählerendstandes also auf keinen Fall noch während der Zeitdauer dieses Nachrichtensignalblokkes ein Freigabesignal an die Synchronisiereinrichtung SE abgeben. Da im dargestellten Fall demnach auch das zweitletzte Bit des ersten Nachrichtensignalblockes ein "1" Bit ist, wird ein solches Freigabesignal erst gegen Ende der Empfangspause P auftreten, sofern nicht, wie angedeutet, währenddessen eine Störung g auftritt. Das Auftreten dieses Freigabesignals ist in der zweiten Zeile von Figur 2 dargestellt und mit e bezeichnet. Als Folge hiervon kann das nachfolgend am Anfang des zweiten Nachrichtensignalblockes NB2 auftretende, hier als unverfälscht angenommene Synchronisierwort f an die Synchronisiereinrichtung SE gelangen und dort ausgewertet werden, so dass eine Neusynchronisierung erfolgt.

Der Zähler Z, der währenddessen wegen der Sperrung des Koinzidenzgliedes K2 nicht weitergezählt worden ist, wird durch das erste Bit des erwähnten Synchronisierwortes f wieder in den Anfangsstand zurückgestellt.

Sollte, wie angedeutet, während der Empfangspause P eine Störung g auftreten, so führt auch diese zur Rückstellung des Zählers Z, so dass der vorausgesetzte Zählerendstand mit Auftreten des richtigen Synchronisierwortes im zweiten Nachrichtensignalblock noch nicht erreicht ist und damit zwar eine Neusynchronisierung noch nicht erfolgen kann, andererseits aber auch verhindert ist, dass die Störung die Ursache einer Neueinstellung ist. In diesem Fall erfolgt, das Ausbleiben weiterer Störungen vorausgesetzt, die Neueinstellung mit dem Auftreten des Synchronisierwortes am Anfang des nachfolgenden dritten, hier nicht dargestellten Nachrichtensignalblockes. Das Auftreten solcher Störungen während der Empfangspause P ist selbstverständlich ganz erheblich weniger häufig als das Auftreten von 10-Kombinationen in den Nachrichtensignalblöcken, so dass diese Verzögerung ohne weiteres hingenommen werden kann.

Nach einer Neusynchronisierung, also während der Synchronbetriebsphase überwacht die Synchronisiereinrichtung SE den empfangenen Nachrichtensignalbitfluss auf das zeitgerechte Auftreten des Synchronisierwortes, wobei gegebenenfalls erst nach mehrmaligem Fehlen einer Synchronisierwortbitkombination zum erwarteten Zeitpunkt eine neue Synchronisierphase eingeleitet wird.

**Patentansprüche**

1. Verfahren zur Synchronisierung von Sende- und Empfangseinrichtungen, insbesondere digitalen Teilnehmerstellen eines PCM-Fernmeldenetzes, durch Auswertung von Synchronisierworten, die am Anfang der von einer übergeordneten Sendeeinrichtung, insbesondere einer digitalen Vermittlungsstelle des PCM-Fernmeldenetzes, unter Einhaltung festgelegter Sendepausen ausgesendeten Nachrichtensignalblöcke (NB1, NB2) auftreten, mit Hilfe einer Synchronisiereinrichtung (SE), die während einer Synchronisierphase aufgrund des Empfanges eines Synchronisierwortes eine Neusynchronisierung veranlasst und in der jeweils anschliessenden Synchronisierphase das zeitgerechte Auftreten des als richtig erkannten Synchronisierwortes überwacht, dadurch gekennzeichnet, dass in der Synchronisierphase die Synchronisiereinrichtung (SE) für ihren Betrieb im Zusammenhang mit einer Neusynchronisation erst dann freigegeben wird, wenn ein vom Sende-/Empfangstakt (T) weitergeschalteter Zähler (Z), der durch jedes empfangende Bit desjenigen Binärwertes ("1"), den das erste Bit eines Synchronisierworts (z.B. f) aufzuweisen hat, in seinen Zähleranfangsstand gestellt wird, einen Zählerstand erreicht hat, der mindestens der Summe der Bitzeitspannen entspricht, über die hinweg in einem Nachrichtensignalblock (NB1, NB2) aufgrund der Gesetzmässigkeit des der Nachrichtenblockübertragung zugrundeliegenden Codes nacheinander Bits des anderen Binärwertes ("0") auftreten können, und bei dessen Erreichen ein Weiterzählen verhindert wird.

2. Verfahren nach Anspruch 1, dadurch gekennzeichnet, dass die Freigabe der Synchronisiereinrichtung (SE) bei einem Zählerstand des Zählers (Z) erfolgt, der einer nahezu solange wie die Empfangspause (P) zwischen dem Empfang zweier Nachrichtensignalblöcke (NB) dauernden Zeitspanne entspricht.

**Claims**

1. Process for synchronising transmitting and receiving devices, in particular digital subscriber stations of a PCM telecommunications network, by the analysis of synchronising words which occur at the start of the communications signal blocks (NB1, NB2) which are transmitted from a superordinate transmitting device, in particular a digital exchange within the PCM telecommunications network, adhering to predetermined transmitting intervals, employing a synchronising device (SE) which brings about resynchronisation during a synchronisation interval as a result of the reception of a synchronising word and in the following synchronous operation phase monitors the prompt occurrence of the synchronising word which has been recognised as correct, characterised in that in the synchronisation phase the synchronising device (SE) is not released for its operation in connection with the resynchronisation until a counter (Z), which is advanced by the transmitting/receiving pulse train (T) and which is brought into its starting counting position by every received bit which possesses that binary value ("1") which must be possessed by the first bit of a synchronising word (e.g. f), has reached a count which corresponds at least to the sum of the bit time intervals over which, in a communications signal block (NB1, NB2), on account of the rules of the code upon which the communications block transmission is based, bits of the other binary value ("0") can occur consecutively; and which when reached prevents further counting.

2. Process as claimed in claim 1, characterised in that the synchronising device (SE) is released when the counter (Z) reaches a count which corresponds to an interval of time which is approximately equal to the reception interval (P) between the reception of two communications signal blocks (NB).

**Revendications**

1. Procédé pour la synchronisation de dispositifs d'émission et de réception, notamment de postes d'abonnés numériques d'un réseau de télécommunications PCM, par évaluation de mots

**0009586**

de synchronisation qui apparaissent au début des blocs de signaux d'information (NB1, NB2) émis par un dispositif d'émission d'ordre supérieur, notamment un central numérique du réseau de télécommunications PCM, en respectant des pauses d'émission déterminées, à l'aide d'un dispositif de synchronisation (SE) qui provoque une nouvelle synchronisation pendant une phase de synchronisation en raison de la réception d'un mot de synchronisation, et dans lequel chaque phase de fonctionnement synchrone suivante contrôle l'apparition correcte dans le temps du mot de synchronisation identifié comme correct, caractérisépar le fait que dans la phase de synchronisation le dispositif de synchronisation (SE) est alors libéré, pour son fonctionnement en rapport avec une nouvelle synchronisation, que lorsqu'un compteur (Z), avancé par la cadence d'émission/réception (T), qui est réglé sur son état de comptage initial par chaque bit reçu présentant la valeur binaire ("1") que doit présenter le premier bit d'un mot de synchronisation (par exemple f), a atteint un état de comptage qui correspond au moins à la somme des intervalles de temps binaires au cours desquels des bits présentant l'autre valeur binaire ("0") peuvent apparaître successivement dans un bloc de signaux d'information (NB1, NB2) en raison de la légitimité du code à la base de la transmission des blocs d'information, et que lorsque cet état de comptage est atteint la poursuite du comptage est empêchée.

2. Procédé suivant la revendication 1, caractérisé par le fait que la libération du dispositif de synchronisation (SE) a lieu lors d'un état de comptage du compteur (Z) qui correspond à un intervalle de temps durant presque aussi longtemps que la pause de réception (P) entre la réception de deux blocs de signaux d'information (NB).

FIG1

FIG2